# EUROPEAN PATENT SPECIFICATION

(11) **EP 3 597 302 B1**
(45) Date of publication and mention of the grant of the patent: **17.01.2024**
(21) Application number: 19175235.1
(22) Date of filing: 17.05.2019
(51) Int. Cl.: B05B 3/00, B05B 3/04

(54) **ORBITAL SPRINKLER WITH SPEED CONTROL BRAKE**
ORBITALER SPRINKLER MIT EINER DREHZAHLREGULIERENDEN BREMSE
ARROSEUR ORBITAL DOTÉ DE FREIN DE COMMANDE DE VITESSE

(30) Priority: 18.07.2018 US 201816038351
(43) Date of publication of application: 22.01.2020
(73) Proprietor: Nelson Irrigation Corporation, Walla Walla, WA 99362 (US)
(72) Inventor: SESSER, George L., Walla Walla, WA 99362 (US); NELSON, Craig B., Walla Walla, WA 99362 (US); HELLIE, Andrew B., Walla Walla, WA 99362 (US); CRAWFORD, Steven E., Walla Walla, WA 99362 (US)
(74) Representative: J A Kemp LLP

(56) References cited:
- EP-A1- 3 248 690
- WO-A2-2010/019850
- WO-A2-2018/089462
- US-A1- 2006 249 594
- US-A1- 2008 017 732
- US-A1- 2013 327 846

## Description

### BACKGROUND

The invention relates to sprinkler heads and, more particularly, to sprinkler heads that nutate, or wobble, while they rotate, to thereby minimize the "donut effect" prevalent with conventional rotating sprinkler heads.

Various nutating or wobbling sprinkler head designs have been proposed, examples of which are described in prior U.S. Pat. Nos. 5,381,960; 5,950,927; 6,530,532 and 6,932,279. Commonly owned U.S. Pat. Nos. 5,439,174; 5,588,595; 5,671,885; 6,267,299; 6,341,733; 6,439,477; 7,287,710; 7,395,977; 7,562,833; 7,942,345; 8,028,932 and 8,991,724 provide further examples of nutating or wobbling sprinkler heads. There are potential shortcomings, however, that can nullify the very nutating affect that makes such sprinklers attractive in the first instance.

One problem often encountered with sprinklers of this type relates to stalling at start-up or even during normal operation. Stalling occurs when the water distribution plate of the sprinkler head fails to tilt at start-up, or ceases tilting during operation, thereby simply rotating and distributing a stream particularly susceptible to the "donut effect" where the wetted pattern area is shaped like a solid ring around a dry center. When nutating or wobbling sprinklers operate as designed, the nutating action tends to fill in the pattern in a substantially uniform manner. Thus, it is important that the water distribution plate reliably and consistently remain in a tilted orientation on start-up and while rotating to achieve the desired wobbling or nutating action.

The stalling problem discussed above has been solved in different ways (see, for example, U.S. Pat. Nos. 5,381,960 and 6,341,733).

Another problem relates to the relatively high speed of rotation of the wobbling sprinkler head. High rotational speeds create the well-known but undesirable "horse-tail" effect that shortens the radius of throw of the sprinkler. While it has been shown that slowing the rotation of the sprinkler using a brake mechanism is effective to obtain maximum throw, completely satisfying solutions to the problem of slowing the rotation speed of a wobbling sprinkler head have yet to be developed. One attempt to slow a wobbling head is described in U.S. Pat. No. 7,395,977.

There remains a need for a wobbler-type sprinkler that effectively and reliably achieves maximum throw radius while maintaining the pattern-uniformity benefits of the wobbler-type sprinkler.

The embodiments shown in the noted U.S. Pat. No. 8,991,724 utilize a framework that surrounds the moving plate/cage. The framework is bulky and expensive. Additionally, such framework requires a larger diameter canister if the sprinkler head is to be mounted in a pop-up canister. Moreover, the fixed strut portions of the framework create dry shadows in the water pattern. Still further, stringy material such as moss or food processing waste in the water can hairpin and build up on the struts and cause stalling issues.

In the sprinkler head of the U.S. Patent Application No. 15/161,920, filed May 23, 2016, a wobbler ring is provided with ridges that are engageable with a gear plate as the wobbler cage is rotated. The gear plate and ridges serve to maintain control and alignment of the wobbler cage during use. As the unit orbits, the meshing of these teeth prevent rotary slippage of the wobbler cage. With each orbit, the cage advances one tooth, thereby clocking the spokes of water coming off the deflector plate to fill in the water pattern. A minor drawback with this design is that as the ridges roll across the teeth of the gear plate, the wobbler cage is shifted up and down as it rolls between the flats of the ridges. This can create unwanted drool and inconsistency in the water pattern.

It would be desirable to overcome the drawbacks with existing designs. EP 3248690 A1 discloses an orbital sprinkler with speed control brake.

### BRIEF SUMMARY

The invention is defined in the claims. The wobbling sprinkler head according to the described embodiments provides for the desired orbital action and braking without large fixed strut framework. Eliminating the framework enables the use of a smaller diameter canister if mounting in a pop-up canister is desired. Additionally, eliminating the framework avoids the dry shadows as well as the potential for stringy material in the water to hairpin and build up on the struts.

The described sprinkler head also lends itself to many different shapes of water patterns without extra cost or complexity. The sprinkler head can provide for full circle watering or, by removing teeth in selected locations of a fixed gear, the wobbler cage can orbit very quickly to some areas (in areas of unbraked orbital movement) leaving very little water in these areas. Still further, the action of the water deflector plate moving in and out of the nozzle stream creates emerging/receding streams that fill in the water pattern for good distribution uniformity without an external diffuser.

In some embodiments, the engagement between the ridges on the wobbler ring and the teeth of the gear plate is replaced with a smooth ledge to eliminate the up and down movement of the wobbler cage as the gear teeth roll across the wobbler ring ridges. The teeth in this embodiment resist torque and thereby prevent slipping without interfering with the orbital motion of the wobbler cage.

In an exemplary embodiment, a sprinkler head includes a sprinkler body with a spool section having facing spool flanges on opposite sides of a spool core, where at least one of the spool flanges includes a circumferential rolling ledge. A nozzle may be positioned within the sprinkler body, and a wobbler cage including a wobbler ring is supported on the spool section. A water deflector plate coupled with the wobbler cage is optionally disposed downstream of the nozzle. A brake assembly is optionally coupled with the water deflector plate for slowing a rotating and wobbling motion of the wobbler cage and the water deflector plate. The brake assembly may include a shaft extending through the water deflector plate and a yoke arm disposed at an end of the shaft, where the yoke arm is engageable with the sprinkler body. An underside of the wobbler ring includes a circumferential rolling surface engaging the circumferential rolling ledge of the at least one spool flange.

The sprinkler head also includes spool teeth positioned on an outside circumference of the one of the spool flanges with the circumferential rolling ledge. The underside of the wobbler ring includes wobbler teeth positioned radially outward of the circumferential rolling surface. In the context, the wobbler teeth are positionable in spaces defined between the spool teeth. The spool teeth may extend radially from the outside circumference of the one of the spool flanges including the circumferential rolling ledge. The spool teeth may extend axially from the one of the spool flanges including the circumferential rolling ledge. In this context, the spool teeth may include a beveled edge. Additionally, leading edges of the spool teeth may be closer to vertical than trailing edges of the spool teeth. The wobbler ring may be provided with an upwardly protruding lip around its perimeter.

In another exemplary embodiment, a sprinkler head includes a sprinkler body having a spool section with a top spool flange facing a bottom spool flange on opposite sides of a spool core. The bottom spool flange may include a circumferential rolling ledge. A wobbler cage includes a wobbler ring supported on the spool section, and a water deflector plate is coupled with the wobbler cage. A brake assembly is optionally cooperable with the wobbler cage for slowing a rotating and wobbling motion of the wobbler cage and the water deflector plate. An underside of the wobbler ring includes a circumferential rolling surface engaging the circumferential rolling ledge of the bottom spool flange.

In yet another exemplary embodiment, a spool and wobbler assembly for a sprinkler includes a spool section with facing spool flanges on opposite sides of a spool core, at least one of the spool flanges including a circumferential rolling ledge; a wobbler cage including a wobbler ring supported on the spool section; and a water deflector plate coupled with the wobbler cage. An underside of the wobbler ring includes a circumferential rolling surface engaging the circumferential rolling ledge of the at least one spool flange.

### BRIEF DESCRIPTION OF THE DRAWINGS

These and other aspects and advantages will be described in detail with reference to the accompanying drawings, wherein Fig. 1 to Fig. 53 are embodiments not falling within the scope of the claims but useful for understanding the invention, in which:
FIG. 1 shows a wobbler-type sprinkler head according to an example;
FIG. 2 is a cross-sectional view through the sprinkler head shown in FIG. 1;
FIG. 3 is a close-up sectional view of the water deflector plate and brake assembly;
FIG. 4 is a perspective view of the sprinkler head shown in FIG. 1;
FIG. 5 shows a wobbler-type sprinkler head according to another example;
FIG. 6 is a cross-sectional view of the sprinkler head shown in FIG. 5;
FIG. 7 is a perspective view of the sprinkler head shown in FIG. 5;
FIG. 8 shows a wobbler-type sprinkler head according to another example;
FIG. 9 is a cross-sectional view of the sprinkler head shown in FIG. 8;
FIG. 10 is a cross-sectional view of the sprinkler head shown in FIG. 8 with the water deflector plate in an inactive position;
FIG. 11 is a perspective view of the sprinkler head shown in FIG. 10;
FIGS. 12-29 show exemplary gear configurations to effect different water patterns;
FIG. 30 shows a wobbler-type sprinkler in a pop-up canister;
FIG. 31 is a cross-sectional view of the sprinkler head shown in FIG. 30;
FIG. 32 is a close-up cross-sectional view of the sprinkler head shown in FIG. 31;
FIG. 33 is a cross-sectional view of the sprinkler head shown in FIG. 31 with the wobbler cage being displaced toward an active position;
FIGS. 34 and 35 show the sprinkler head of FIG. 31 in an active position;
FIG. 36 is a perspective view of the sprinkler head shown in FIG. 31 with the wobbler cage in an active position;
FIG. 37 is a perspective view of the sprinkler head shown in FIG. 31 in a retracted position;
FIG. 38 shows a wobbler-type sprinkler head according to another example;
FIG. 39 is a cross-sectional view of the sprinkler head shown in FIG. 38;
FIG. 40 is a close-up sectional view showing the brake gear engaged with the ring gear;
FIGS. 41-43 are perspective views of the sprinkler head shown in FIG. 38;
FIG. 44 is a cross-sectional view of the sprinkler head shown in FIG. 38 with the wobbler cage in an inactive position;
FIG. 45 is a perspective view of a wobbler-type sprinkler head according to another example;
FIG. 46 is a cross-sectional view of the sprinkler head shown in FIG. 45;
FIG. 47 is a cross-sectional view of the sprinkler head shown in FIG. 45 in an inactive position;
FIG. 48 shows the sprinkler head of FIG. 45 in the inactive position;
FIGS. 49-53 show a modification of the wobbler-type sprinkler head incorporating a smooth rolling surface for the wobbler ring;
FIGS. 54-58 show a variation of the assembly with the smooth rolling surface; and
FIG. 59 shows a further variation with an upwardly protruding lip around the periphery of the wobbler cage.

### DETAILED DESCRIPTION

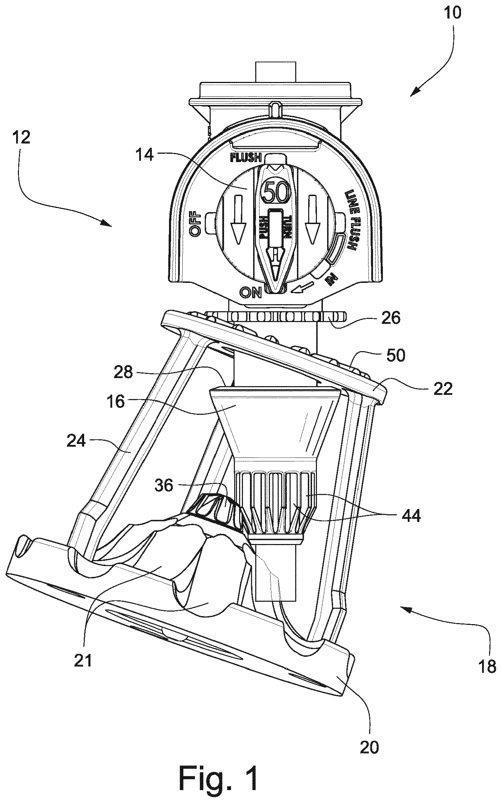

FIGS. 1-4 show a wobbler-type sprinkler head 10 according to an embodiment useful for understanding the invention. The sprinkler head 10 includes a sprinkler body 12 and a nozzle 14 positioned within the sprinkler body 12. In some examples, the nozzle 14 is a nozzle insert that is positionable in a sideways-oriented, complementary recess provided in the sprinkler body 12. The nozzle/nozzle insert 14 may be formed as a substantially-cylindrical body, possibly injection-molded of hard plastic material such as PVC (or other suitable plastic or metal material). The nozzle 14 may be provided with a nozzle bore with an inlet in communication with water flow and an outlet or nozzle outlet orifice that nozzles or meters water output from the sprinkler body 12.

A fixed gear 16 is coupled with the sprinkler body 12, and a wobbler cage 18 is supported on the sprinkler body 12. A water deflector plate 20 is coupled with the wobbler cage 18 and disposed downstream of the nozzle 14. The water deflector plate 20 is positioned to intercept, i.e., deflect, the water flow output from the nozzle 14. The water deflector plate 20 includes a plurality of deflecting grooves 21 that deflect the water according to a predefined water pattern and also serve to impart a rotating moment on the deflector plate 20.

The wobbler cage 18 supports the water deflector plate 20 as shown. The wobbler cage 18 includes a wobbler ring 22 and a plurality of struts 24 connected to the wobbler ring 22. The water deflector plate 20 is connected to the wobbler cage 18 by the struts 24. The deflection grooves 21 of the water deflector plate 20 may be arranged relative to the struts 24 to minimize interference by the struts 24 during use. Regardless, since the wobbler cage 18 is turning during use, any interference by the struts 24 with the projected water flow is minimal and would not result in the shadow areas that are a problem with the existing strut framework of prior designs.

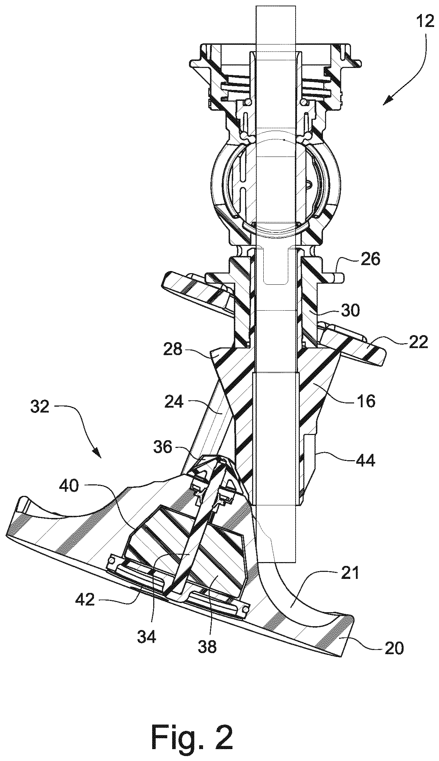

In the embodiment useful for understanding the invention shown in FIGS. 1-4, the wobbler cage 18 is supported on the sprinkler body 12 by a gear plate 26 secured to the sprinkler body 12 and a shoulder 28 of the fixed gear 16. The wobbler cage 18 is positionable in the offset orientation shown in FIGS. 1-4 by virtue of the space between the gear plate 26 and the shoulder 28 and the size of an opening in the wobbler ring 22 over the sprinkler body 12. In some examples, with reference to FIG. 2, the gear plate 26 is integral with a sleeve member 30 secured below the nozzle housing. In some examples, with reference to FIG. 2, the fixed gear 16 is press and snap fitted into the sleeve member 30.

A brake assembly 32 is coupled with the water deflector plate 20 for slowing a rotating and wobbling motion of the wobbler cage 18 and the water deflector plate 20. The brake assembly 32 may include a shaft 34 that extends through the water deflector plate 20 and a brake gear 36 disposed at an end of the shaft. The brake gear 36 is engageable with the fixed gear 16. In some examples, the brake assembly 32 is a viscous brake assembly including a rotor 38 that is press fit to the shaft 34 and is rotatable with the shaft 34. A bearing 42 supports the opposite end of the shaft 34. A high-viscosity damping fluid fills the cavity 40 and acts between the rotor 38 and the deflector plate 20. Braking action is imparted when the fluid is sheared as the rotor 38 rotates relative to the deflector plate 20.

In the embodiment useful for understanding the invention shown in FIGS. 1-4, the fixed gear 16 includes external gear teeth 44, and corresponding teeth of the brake gear 36 are engaged with the external gear teeth 44 of the fixed gear 16. As discussed in more detail below, the external gear teeth 44 may be arranged according to a desired water pattern. In the embodiment useful for understanding the invention shown in FIGS. 1-4, the brake gear 36 remains in engagement with the external gear teeth 44 of the fixed gear 16 regardless of whether water is flowing through the nozzle 14. As a consequence, the brake gear 36 is always positioned out of a water stream flowing through the nozzle 14.

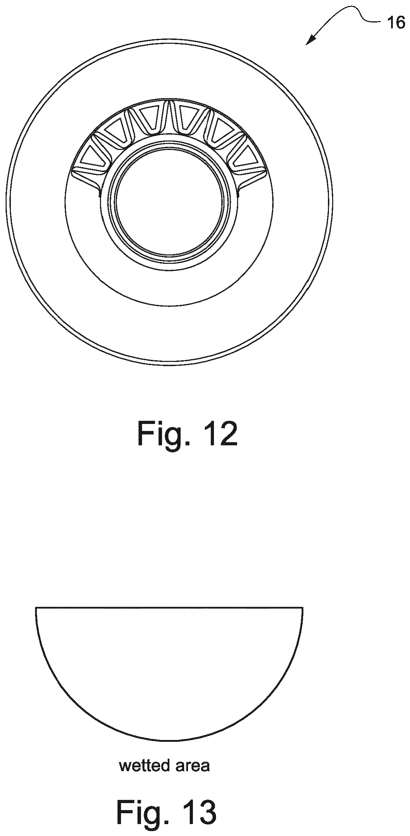

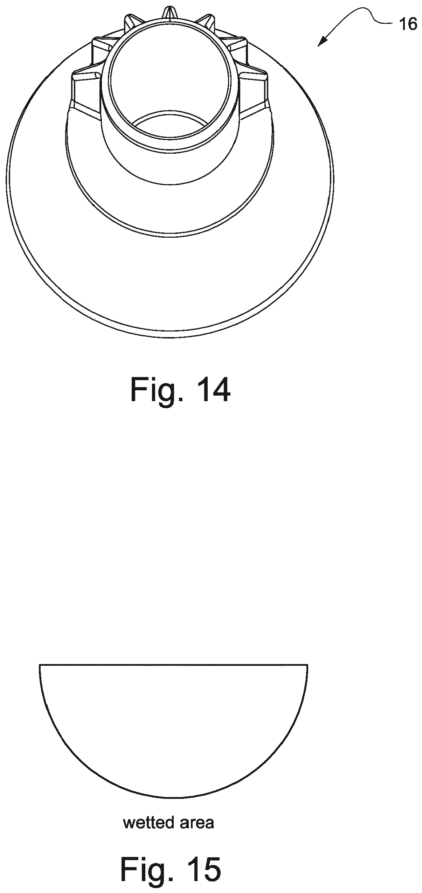

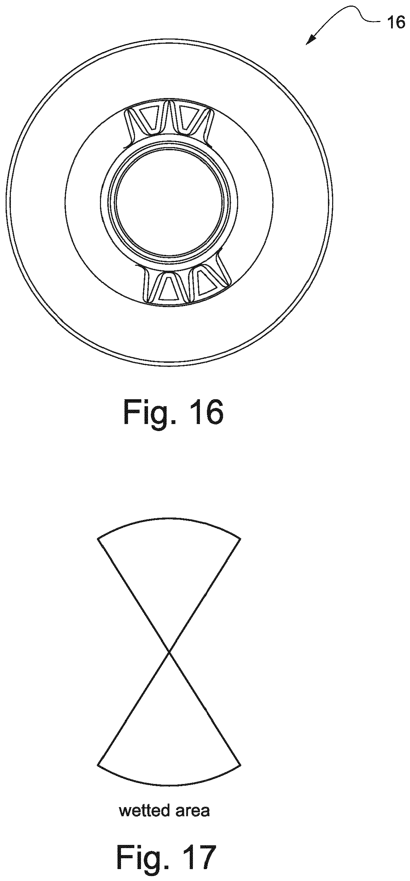

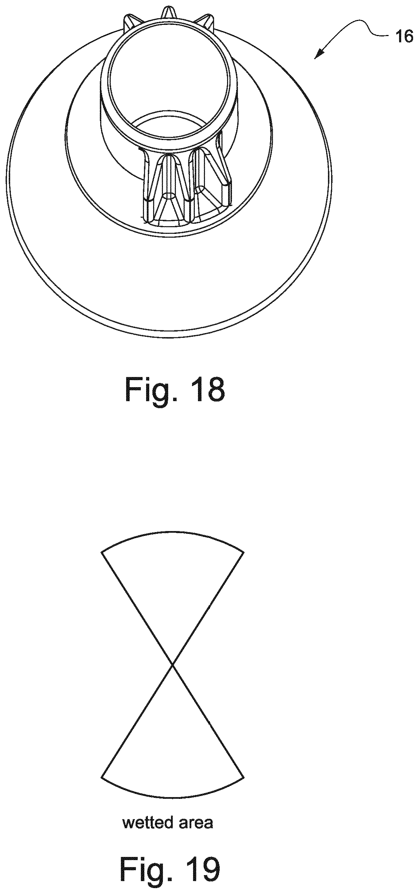

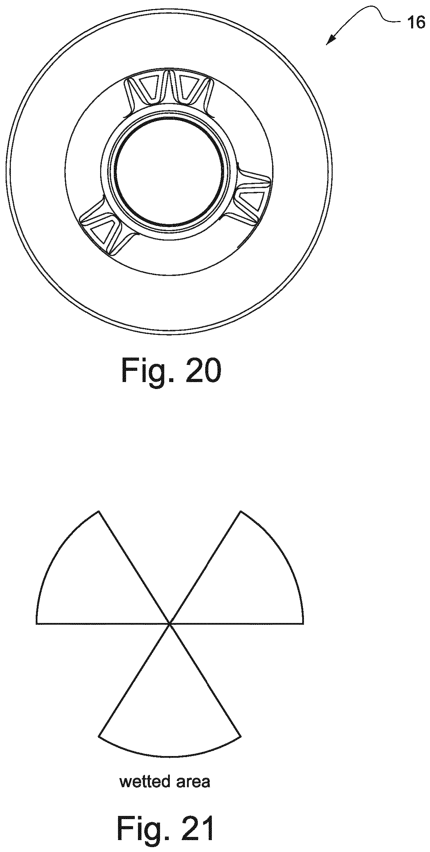

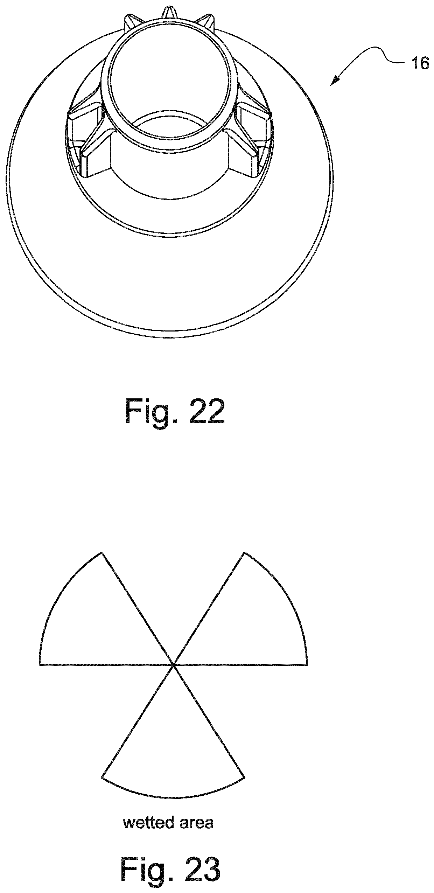

In use, water flowing through the nozzle 14 impacts the grooves 21 on the water deflector plate 20, which disperses the water according to a predefined water pattern. The water flow impacting the grooves 21 on the water deflector plate 20 causes the water deflector plate and the wobbler cage 18 to rotate. The brake gear 36 engaged with the teeth 44 of the fixed gear 16 serves to control a rotating speed of the water deflector plate 20. In some examples, an exemplary normal speed of rotation may be in the range of 0.5-5 RPM. By removing gear teeth 44 in selected locations of the fixed gear 16, the deflector plate 20 can orbit very quickly through some areas. In areas of unbraked orbital movement, the deflector plate 20 may quickly accelerate to a speed of several hundred RPMs or more, leaving very little water in these areas. Exemplary gear teeth configurations for the fixed gear 16 and the resulting water pattern wetted areas are shown in FIGS. 12-23.

In the embodiment useful for understanding the invention shown in FIGS. 1-4, since the brake gear 36 maintains its engagement with the fixed gear 16, the wobbler cage 18 and water deflector plate 20 are always tipped, eliminating the need for any other mechanism to get the deflector plate off-center at startup.

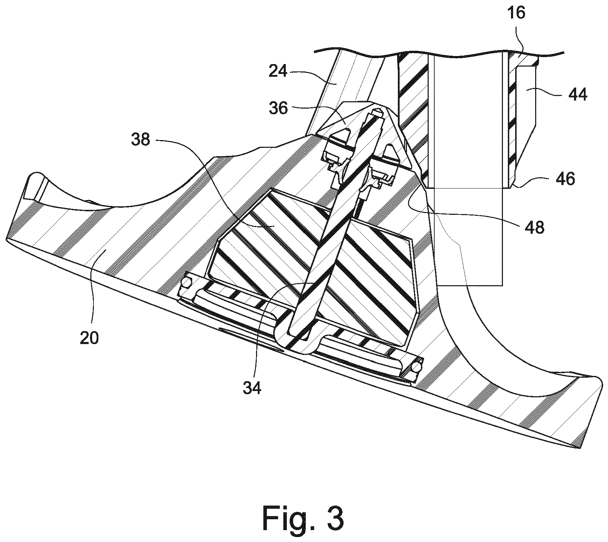

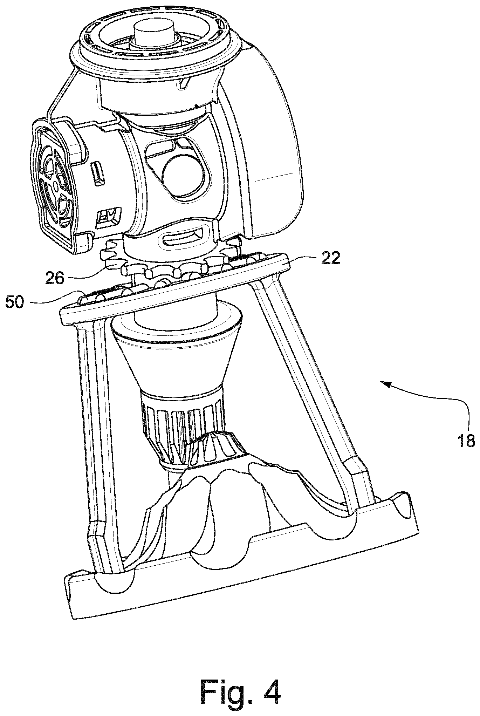

In some applications, the water deflector plate 20 may be subjected to side impact loads, e.g., being dragged through crops or the like. In order to prevent damage to the gear teeth 44 of the fixed gear 16 and/or the brake gear 36, the fixed gear 16 is provided with a snout 46 that extends below the gear 16, and the water deflector plate 20 is provided with a shoulder 48 that together take the load if the plate 20 gets struck from the side. See, e.g., FIG. 3. As such, the brake gear 36 and the shaft 34 can be protected from overload. Additionally, with particular reference to FIG. 4, the wobbler ring 22 may be provided with ridges 50 that are engageable with the gear plate 26 as the wobbler cage 18 is rotated. The gear plate 26 and ridges 50 maintain control and alignment of the wobbler cage 18 during use. In an exemplary construction, the gear plate 26 may have fifteen teeth, and there may be sixteen ridges 50 on the wobbler ring 22. As the unit orbits, the meshing of these teeth prevent rotary slippage of the wobbler cage 18; and also with each orbit, the cage advances one tooth, thereby clocking the spokes of water coming off the grooves 21 to fill in the water pattern.

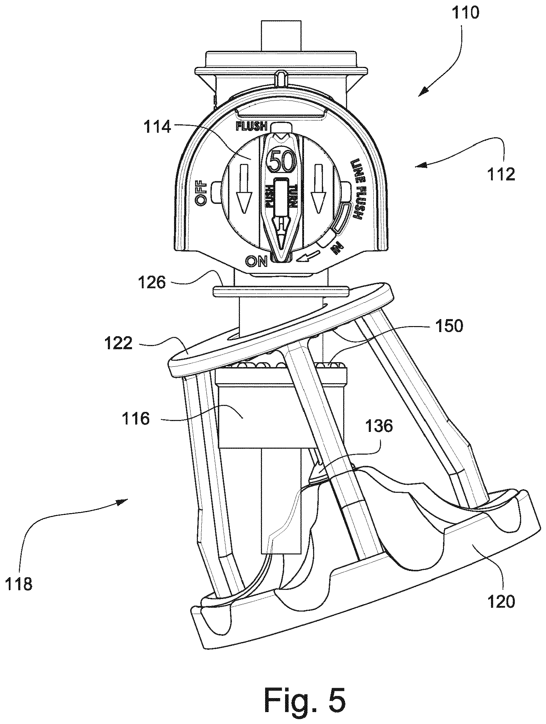

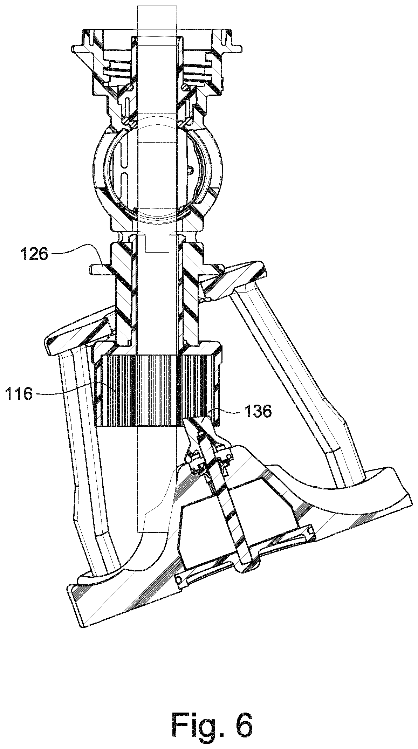

FIGS. 5-7 show an alternative embodiment useful for understanding the invention of the wobbler-type sprinkler head. In this and subsequent embodiments, similar elements are identified with like reference numerals preceded by a third digit.

The sprinkler head 110 in FIGS. 5-7 including a sprinkler body 112 utilizes a ring gear 116 with internal gear teeth as the fixed gear rather than the fixed gear 16 with external teeth shown in FIGS. 1-4. With the ring gear 116 and internal gear teeth, the wobbler cage 118 is positionable into an inactive position when no water is flowing through the nozzle 114 in which the wobbler cage 118 is generally level and the brake gear 136 is coaxial with an outlet of the nozzle 114 or the ring gear 116. In an active position as shown in FIGS. 5-7, the wobbler cage 118 is pivoted such that the brake gear 136 is engaged with the internal gear teeth of the fixed/ring gear 116.

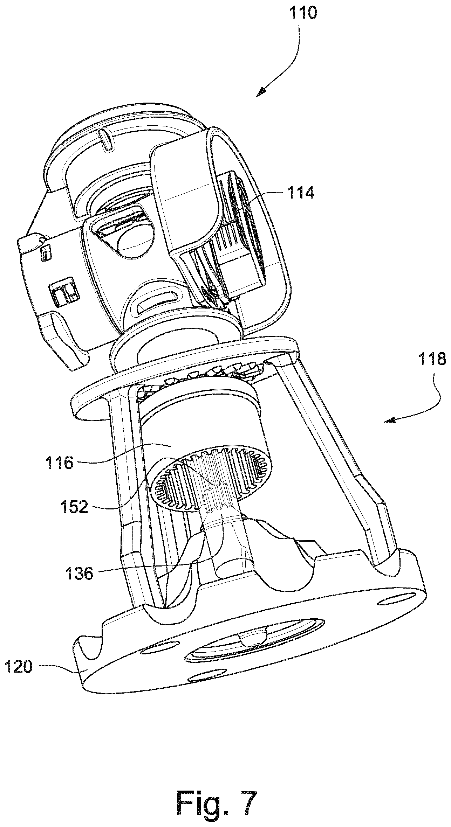

In this embodiment useful for understanding the invention, the gear plate 126 may be without spokes, and corresponding ridges 150 are provided on a deflector plate side of the wobbler ring 122 and an upstream surface of the ring gear 116. See FIGS. 5 and 7.

As shown in FIG. 7, a distal end 152 of the brake gear 136 may be angled relative to a flow of water through the nozzle 114. In some examples, at startup, in the inactive position, the wobbler cage will be hanging straight down. As water flows through the nozzle 114 and impacts the angled distal end 152 of the brake gear 136, the angle of the distal end 152 will force the deflector plate 120 and wobbler cage 118 off center. Once the wobbler cage 118 and deflector plate 120 are displaced, water flow through the nozzle 114 will maintain the offset orientation of the wobbler cage 118.

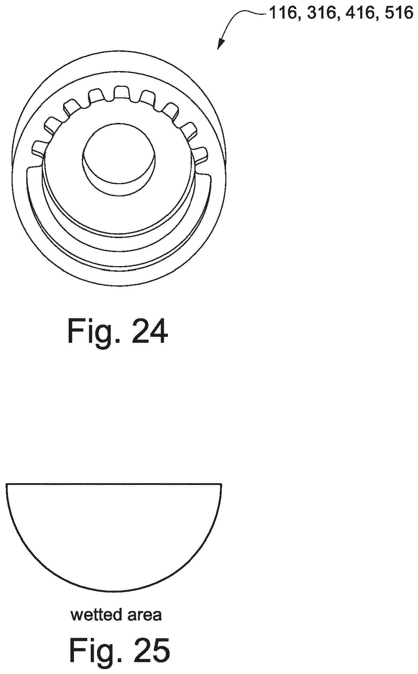

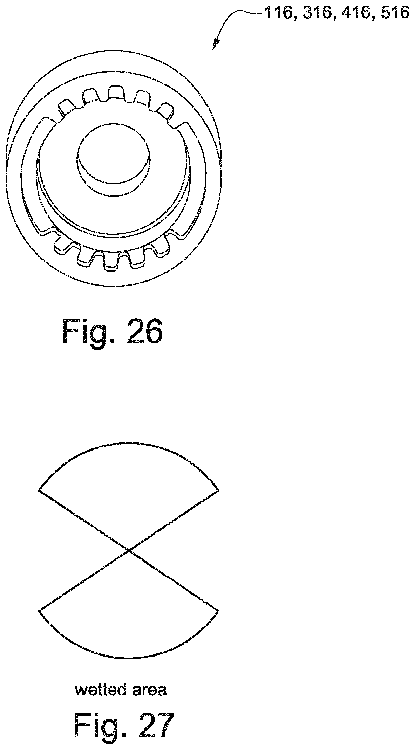

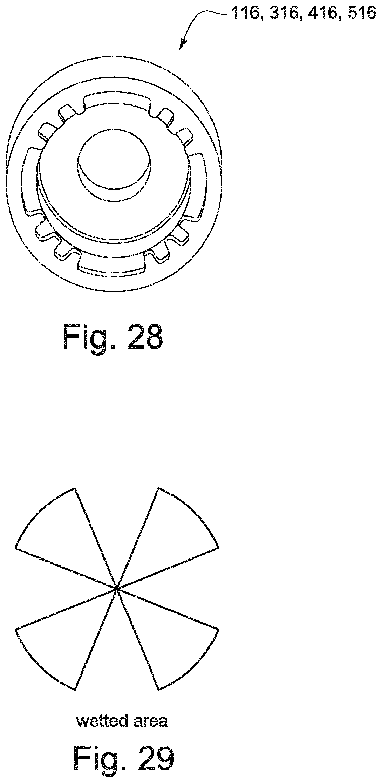

Gear teeth from the ring gear 116 may similarly be removed so that the deflector plate 120 can orbit very quickly through some areas to control the water pattern. Exemplary gear teeth configurations for the gear 116 and the resulting water pattern wetted areas are shown in FIGS. 24-29.

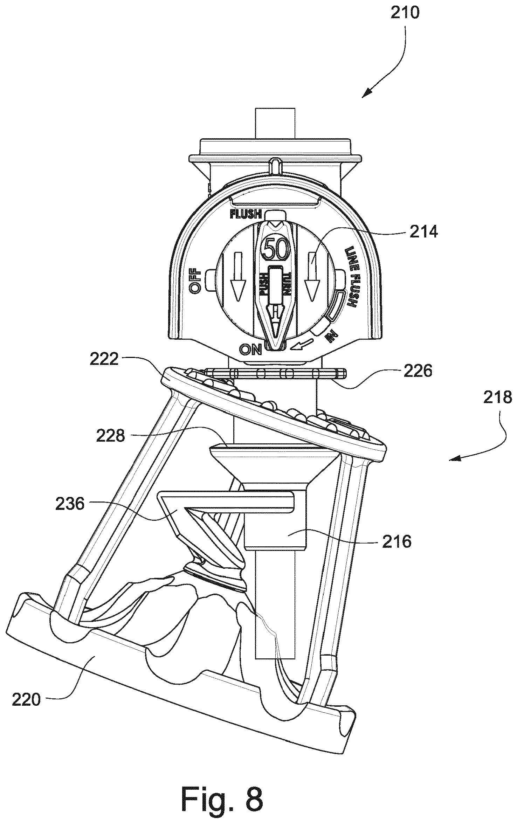

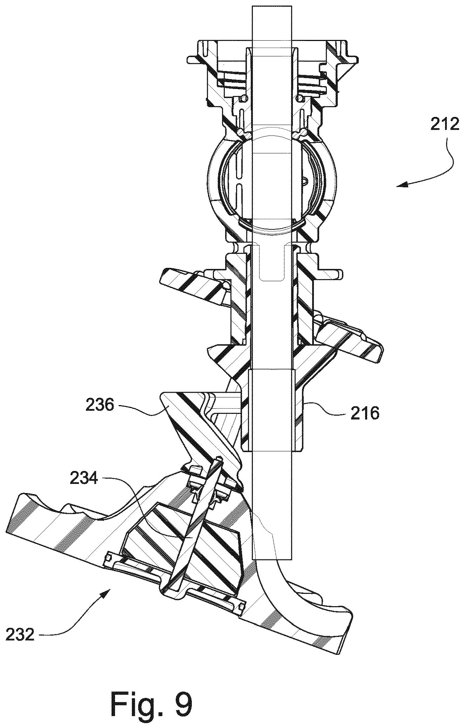

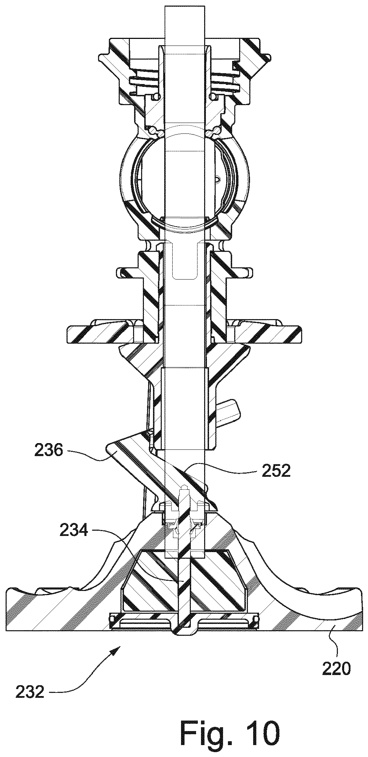

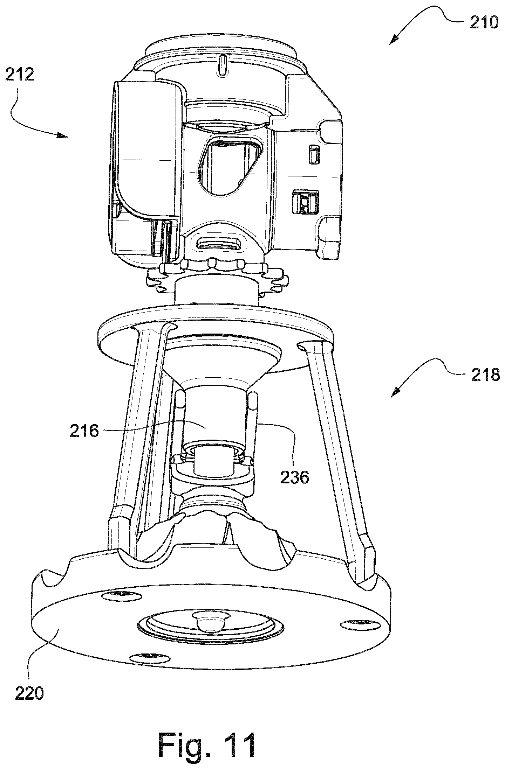

FIGS. 8-11 show another alternative embodiment useful for understanding the invention for the wobbler-type sprinkler head 210. In this example, the brake gear is replaced with a yoke arm 236 that is sized and positioned to loosely straddle a fixed sleeve 216. The wobbler cage 218 and water deflector plate 220 are pivotable between an inactive position (shown in FIGS. 10 and 11) and an active position (shown in FIGS. 8 and 9). The wobbler ring 222 of the wobbler cage 218 is positioned between the gear plate 226 and the shoulder 228 of the fixed sleeve 216.

In use, a water stream from the nozzle 214 impacts an angled surface 252 of the yoke arm 236 to force the wobbler cage 218 to an offset position toward the active position. Subsequently, the water flow impacting the water deflector plate 220 maintains the wobbler cage 218 and the deflector plate 220 in the active position. The yoke arm 236 is fixed to the shaft 234 of the brake assembly 232.

In the active position, with reference to FIGS. 8 and 9, the yoke arm 236 engages the fixed sleeve 216 such that the orbital motion of the wobbler cage 218 causes the yoke arm 236 to rotate around the fixed sleeve 216 and also to rotate brake shaft 234, thereby braking the orbital motion of the wobbler cage 218. At rest, as shown in FIGS. 10 and 11, the brake shaft 234 is aligned with the nozzle 214 and the center of the sprinkler body 212.

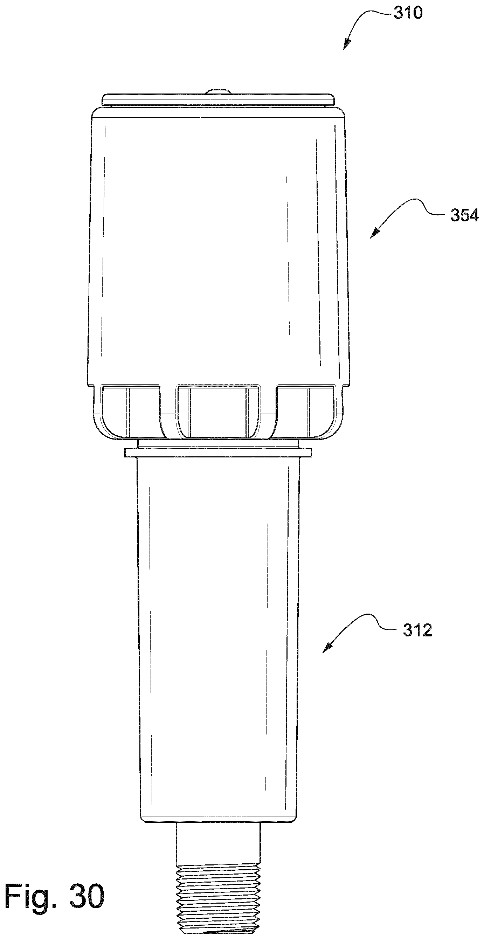

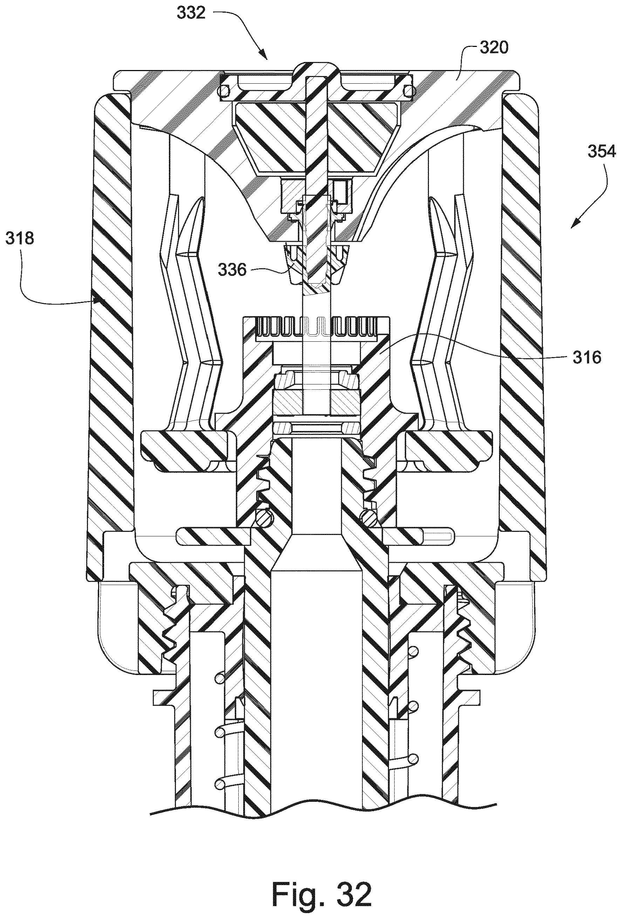

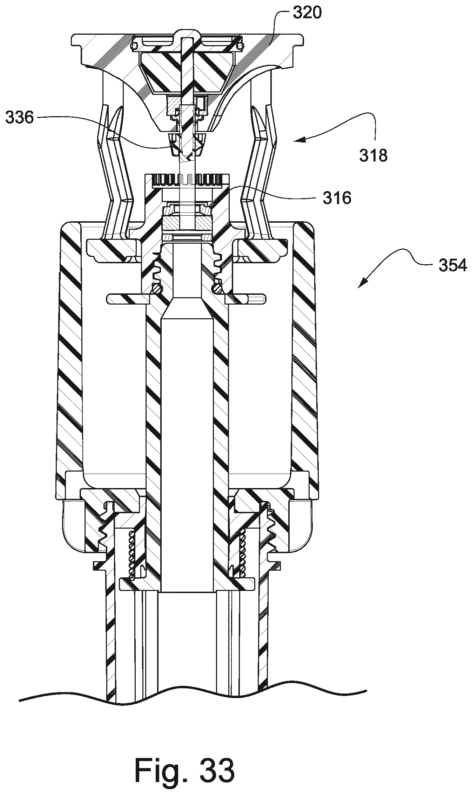

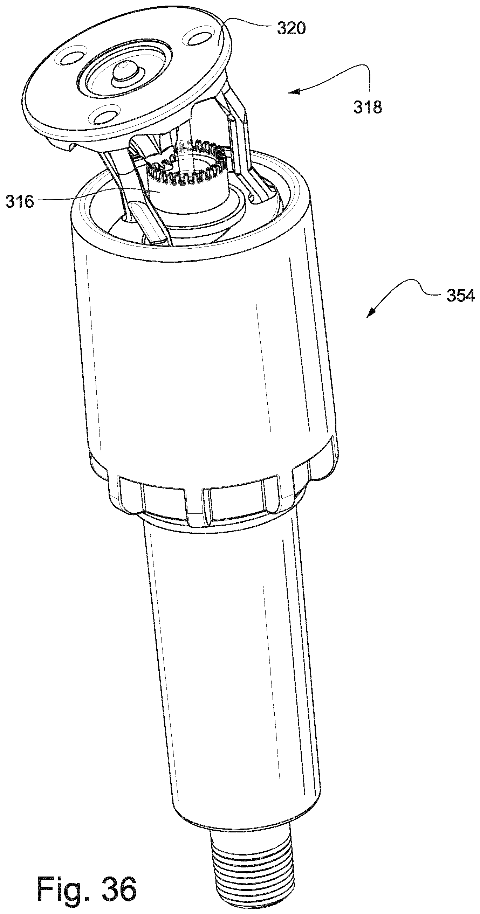

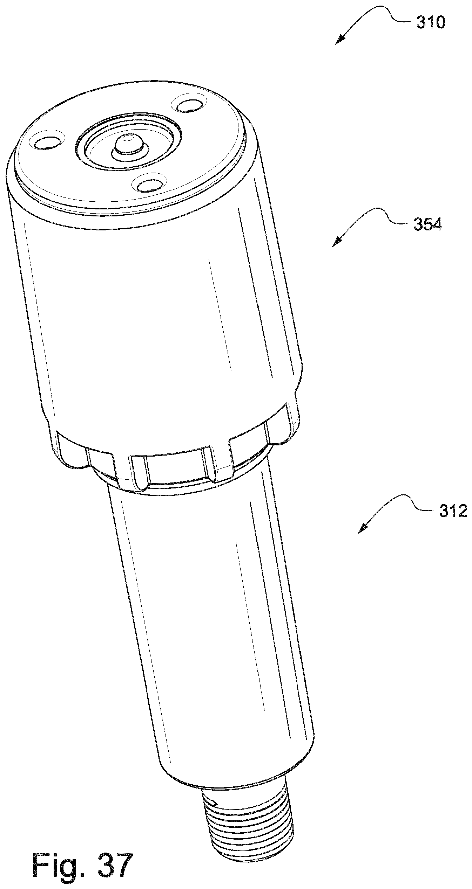

FIGS. 30-37 illustrate another exemplary alternative embodiment useful for understanding the invention of the wobbler-type sprinkler head 310. In this example, the nozzle, fixed gear and wobbler cage are selectively disposable in a canister 354. The wobbler cage 318 is displaceable in the canister 354 between a retracted position (FIGS. 30-32 and 37) and an extended position (FIGS. 33-36). Like conventional pop-up sprinkler assemblies, the sprinkler head is typically mounted on a riser or the like. The sprinkler components are biased to the retracted position by a spring 356 secured in the housing 312. The assembly 332 is displaced to its extended position by pressure exerted by the water flow through the nozzle 314. These components and their operation are generally known, and the details thereof will not be further described.

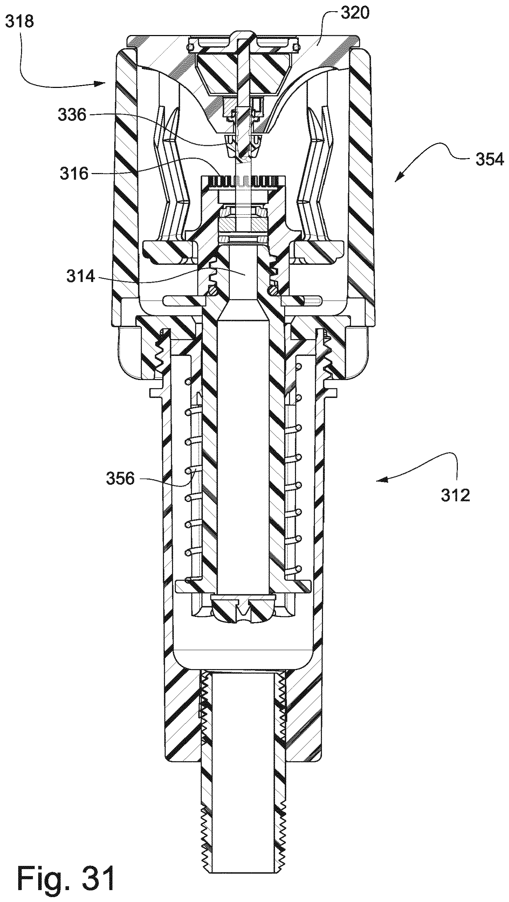

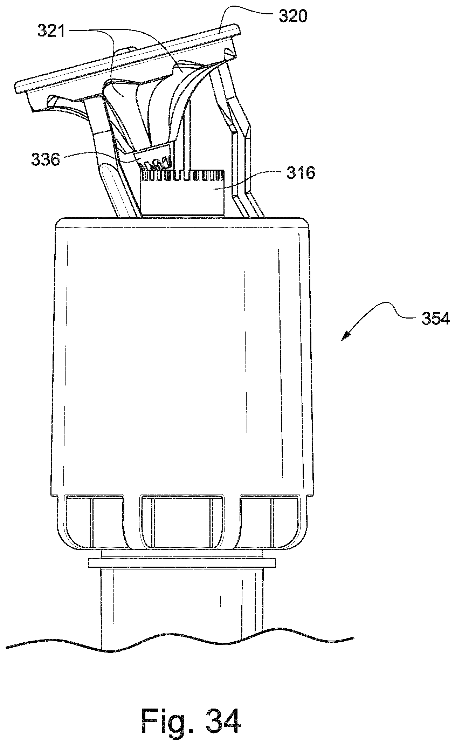

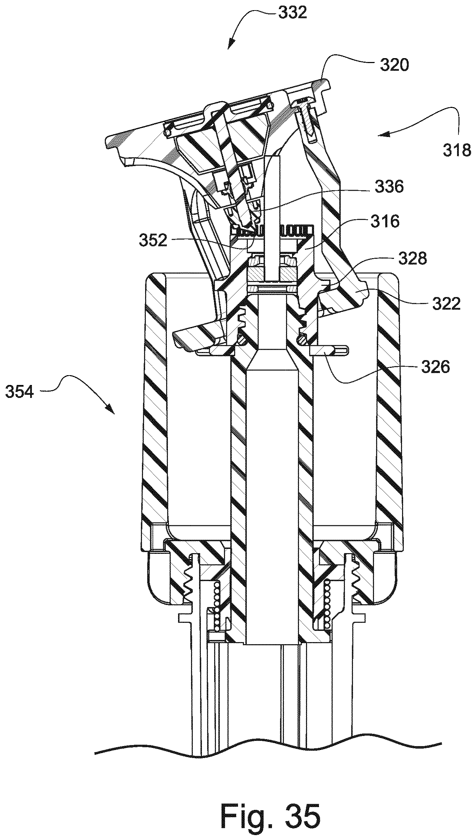

In the retracted position, the brake gear 336 is aligned with the nozzle 314 and is coaxial with the fixed gear 316. Once the nozzle 314, wobbler cage 318 and water deflector plate 320 are displaced to the extended position by water flow through the nozzle 314, the wobbler cage 318 is pivotable into a use position as shown in FIGS. 34-36. In the use position, the brake gear 336 is engaged with the fixed gear 316. The shape and orientation of the grooves 321 in the water deflector plate 320 cause the wobbler cage 318 and the water deflector plate 320 to rotate. As shown in FIG. 35, the brake gear 336 is provided at its distal end 352 with an angled surface so that in the resting position, at startup, the water flow impacts the angled surface of the distal end 352 to force the wobbler cage 318 off center. Like prior examples, the wobbler ring 322 of the wobbler cage 318 is positioned between a ledge or shoulder 328 of the fixed gear 316 and a gear plate 326. When the water flow is terminated, the spring 356 draws the nozzle 314, the wobbler cage 318 and the water deflector plate 320 back into the canister 354, and the wobbler cage 318 is pivoted back to its rest position shown in FIGS. 31, 32 and 37. Since the wobbler cage 318 is pivotable to the orientation shown in FIGS. 31, 32 and 37, the unit can fit into a relatively small diameter canister. Moreover, during startup, if the water pressure is coming up slowly, while the pressure is still low and the wobbler cage 318 has not tilted over yet, the wobbler cage 318 and deflector plate 320 are free to spin and water will be flowing over the brake gear 336 and into the grooves 321 in the deflector plate 320. This action creates small moving streams that are easy on the soil as compared to many sprinklers that have a very large concentrated, slow-moving stream at startup, which can be erosive to the soil and disturb germinating seeds. At some point, the pressure will get high enough at the angled face of the distal end 352 to create a sufficient force to tilt the wobbler cage 318, and the unit will then operate normally.

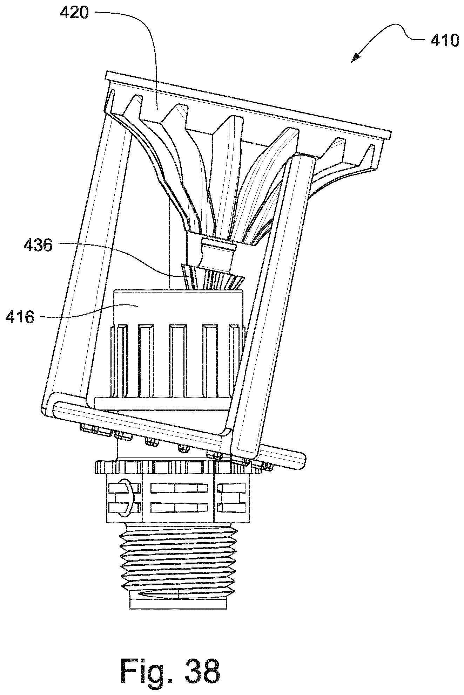

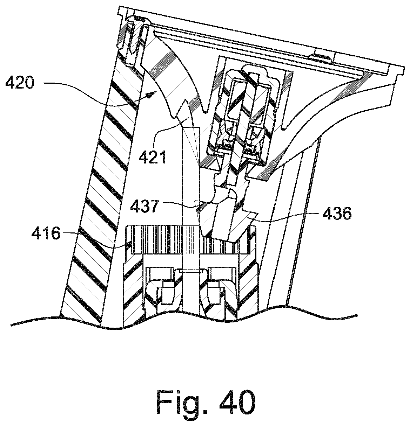

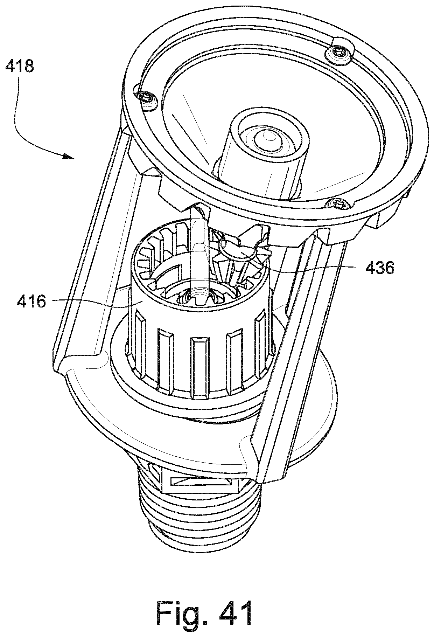

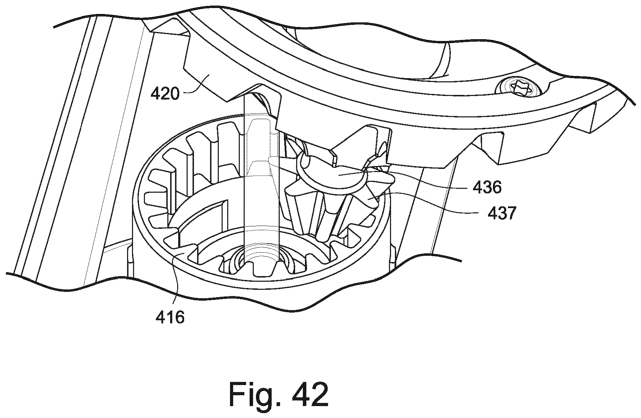

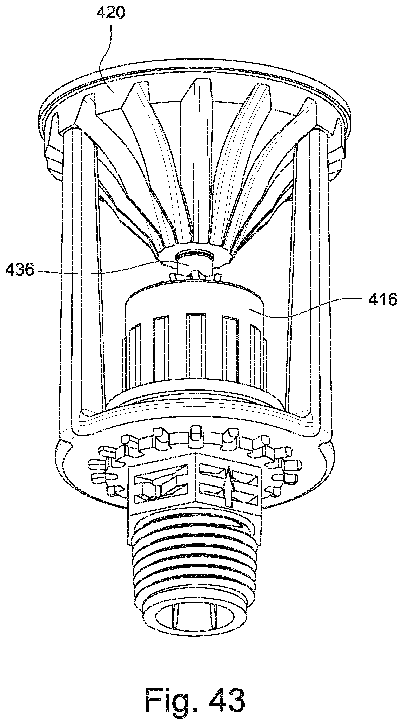

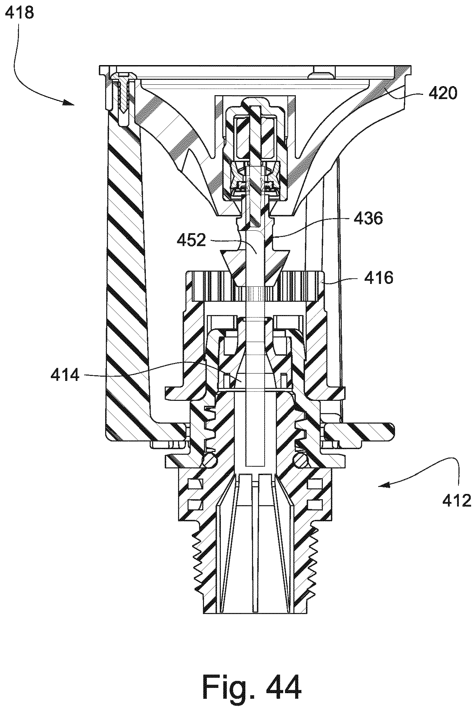

FIGS. 38-44 show another alternative embodiment useful for understanding the invention of the wobbler-type sprinkler head. The sprinkler head 410 including a sprinkler body 412 is not shown in a pop-up application; but as would be readily apparent to those of ordinary skill in the art, the assembly could be put into a canister for such an application.

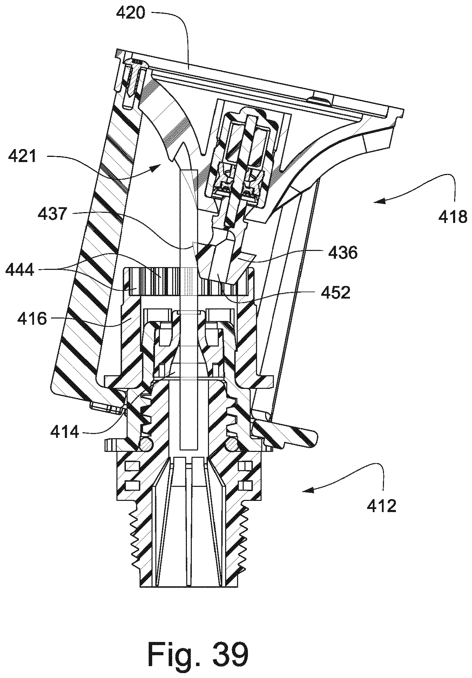

In this example, teeth 437 of the brake gear 436 are engageable with corresponding fixed gear teeth 444 of the fixed gear 416. As shown in FIGS. 39-42, the brake gear teeth 437 extend radially into a water stream flowing through the nozzle 414 when the brake gear 436 is engaged with the fixed gear 416 (i.e., in an active/use position as shown in FIGS. 38-43). The teeth 437 of the brake gear 436 intermittently interrupt the stream between the nozzle 414 and the grooves 421 of the deflector plate 420 to further provide intermittent diffusion of the stream to fill in the distribution pattern. In this context, in all examples, significant intermittent diffusion of the stream occurs as the plate grooves of the water deflector plate move in and out of the stream during normal rotation of the deflector plate. This embodiment useful for understanding the invention provides additional intermittent diffusion by the radially extended teeth 437 of the brake gear 436.

The brake gear 436 also may be provided with an internal water passage 452. See FIG. 39. The internal water passage 452 includes a bend as shown, which may be a 90-degree turn. In the startup mode, the stream is captured in the passage 452 and then turned by the bend (e.g., 90 degrees) to create an overturning moment to kick the wobbler cage 418 off center into the use position.

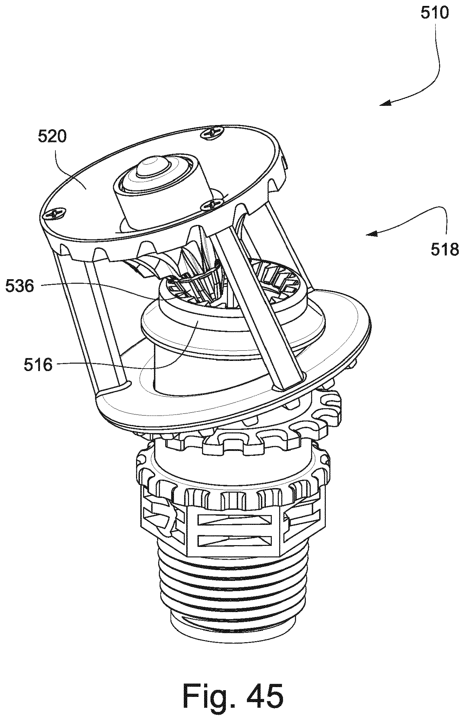

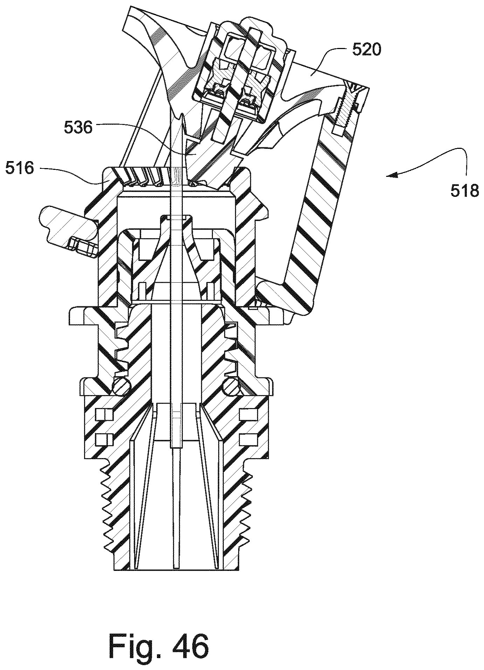

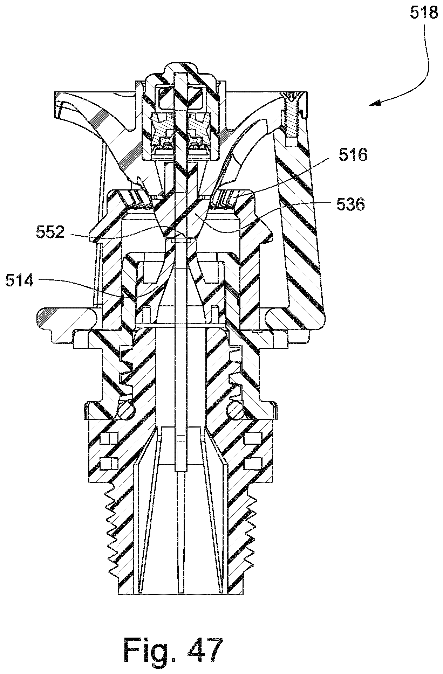

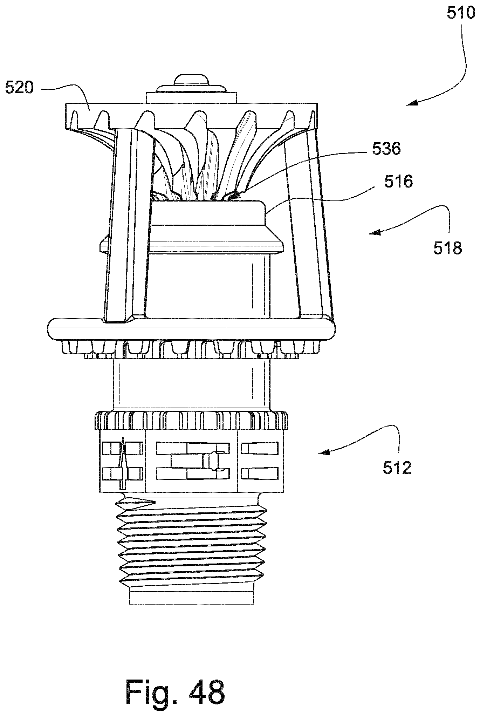

FIGS. 45-48 show another alternative embodiment useful for understanding the invention of the wobbler-type sprinkler head 510 including a sprinkler body 512. In this example, the wobbler cage 518 and the water deflector plate 520 are displaceable between the inactive position in which the brake gear 536 is not engaged with the fixed gear 516 (FIGS. 47 and 48) and an active position in which the brake gear 536 is engaged with the fixed gear 516 (FIGS. 45 and 46). In the inactive position, the brake gear 536 rests on the nozzle 514 to cover the nozzle. The capped off nozzle prevents insects from crawling into the nozzle when the unit is off. This feature prevents plugging of small nozzles that are used in certain applications. In this example, the brake gear 536 is provided with an angled notch 552 in a surface facing the nozzle 514 to push the wobbler cage 518 and the deflector plate 520 toward the offset use position at startup.

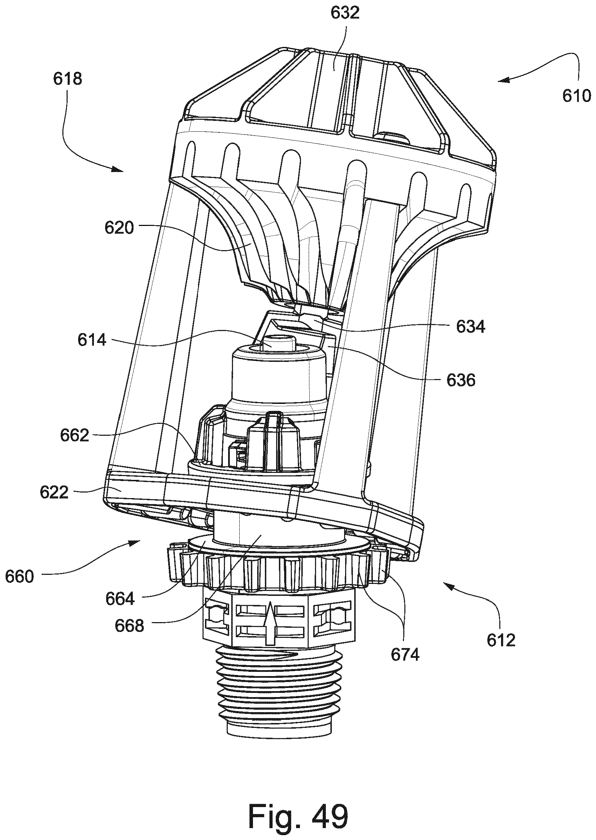

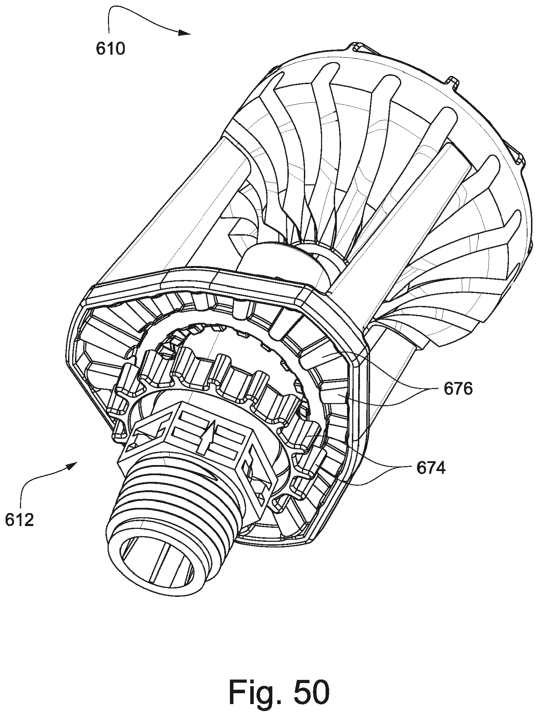

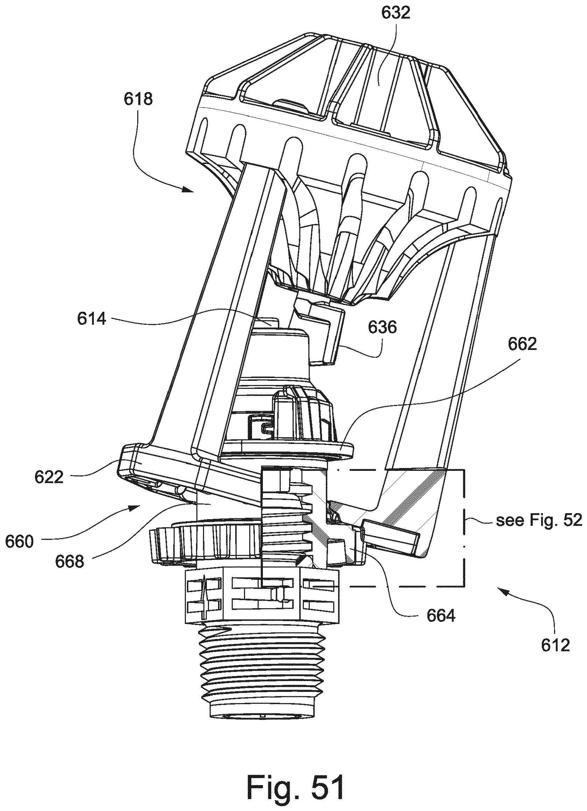

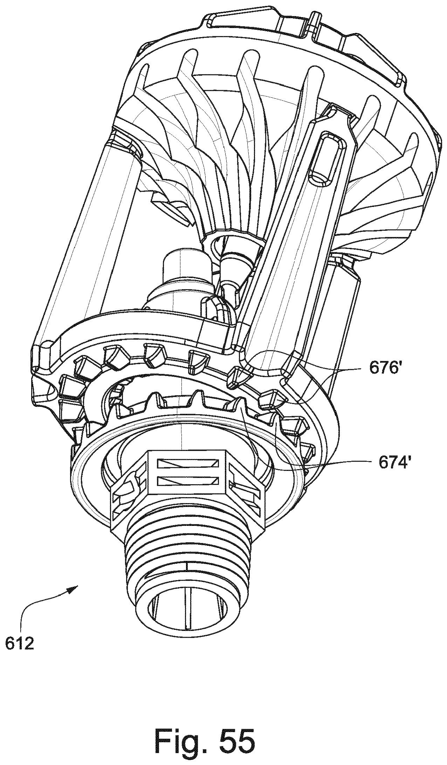

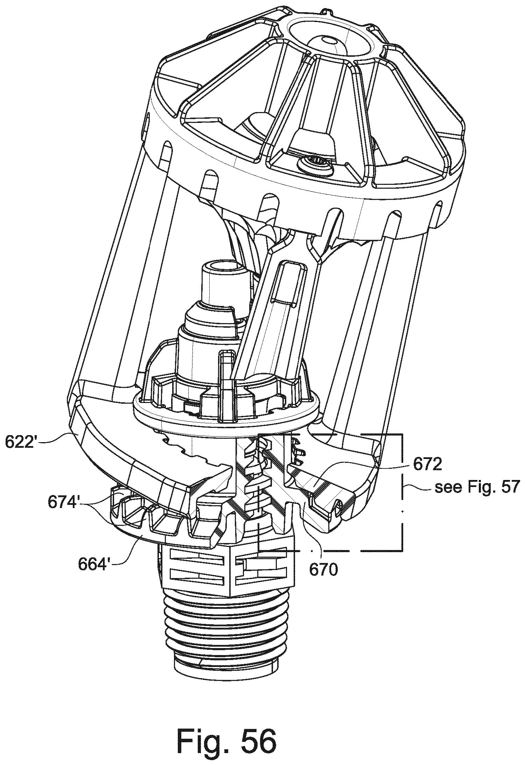

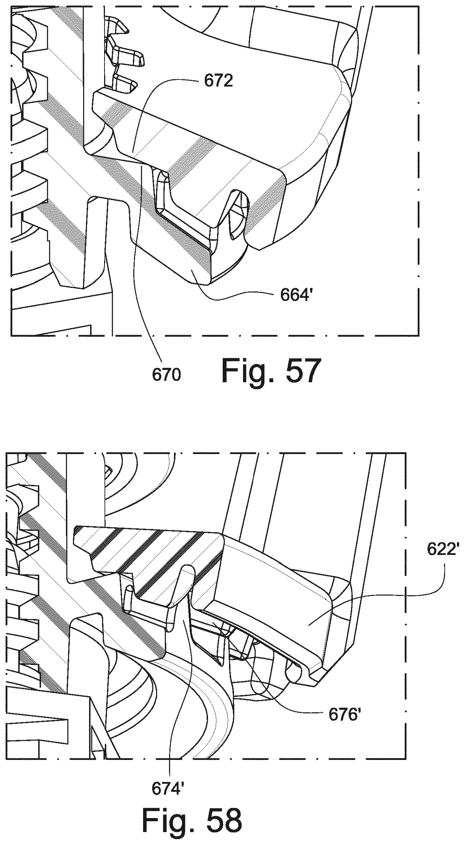

FIGS. 49-58 show variations useful for understanding the invention of the wobbler-type sprinkler head 610 including a sprinkler body 612. As shown in FIGS. 49 and 51, the sprinkler body 612 includes a spool section 660 with facing spool flanges 662, 664 on opposite sides of a spool core 668. A nozzle 614 is positioned within the sprinkler body 612. A wobbler cage 618 includes a wobbler ring 622 supported on the spool section 660. Specifically, the wobbler ring 622 is positioned between the spool flanges 662, 664 and surrounds the spool core 668. A water deflector plate 620 is coupled with the wobbler cage 618 as shown and is positioned downstream of the nozzle 614.

The brake assembly 632 is coupled with the water deflector plate 620 for slowing a rotating and wobbling motion of the wobbler cage 618 and the water deflector plate 620. Like the above examples, the brake assembly 632 includes a shaft 634 extending through the water deflector plate 620 and a yoke arm 636 disposed at an end of the shaft 634. The yoke arm 636 is engageable with the sprinkler body 612.

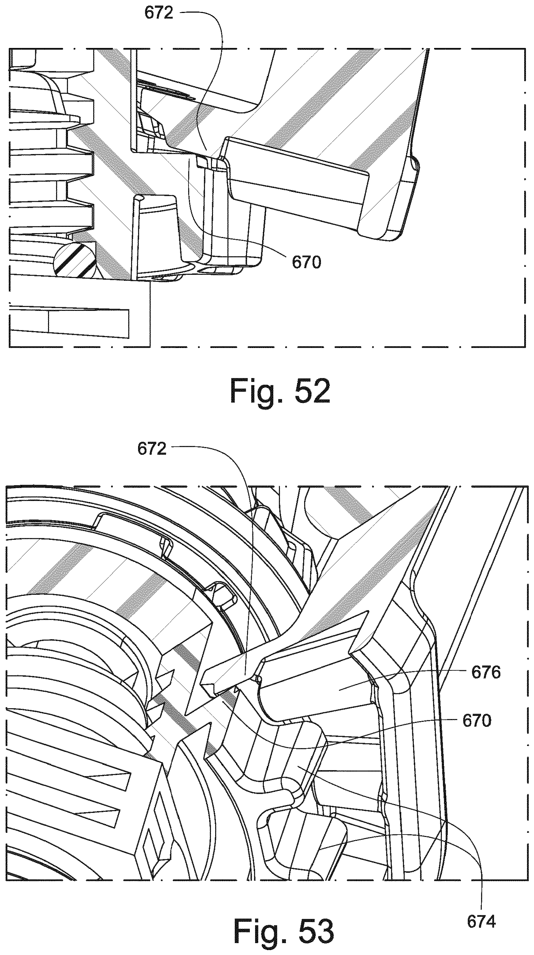

FIGS. 52 and 53 are close-up views showing the wobbler ring 622 engaging the bottom spool flange 664. At least one of the spool flanges 662, 664 includes a circumferential rolling ledge 670. An underside of the wobbler ring 622 is provided with a circumferential rolling surface 672 that engages a circumferential rolling ledge 670 of the spool flange(s). In the embodiment useful for understanding the invention shown in FIGS. 49-53, the circumferential rolling ledge 670 is provided on the bottom or upstream spool flange 664.

In some examples, spool teeth 674 are positioned on an outside circumference of the upstream spool flange 664. As shown, the underside of the wobbler ring 622 is provided with wobbler teeth 676 positioned radially outward of the circumferential rolling surface 672. In use, the wobbler teeth 676 are positioned in spaces defined between the spool teeth 674 without physically engaging the spool teeth 674. In the embodiment useful for understanding the invention shown in FIGS. 49-53, the spool teeth 674 extend radially from an outside circumference of the spool flange 664.

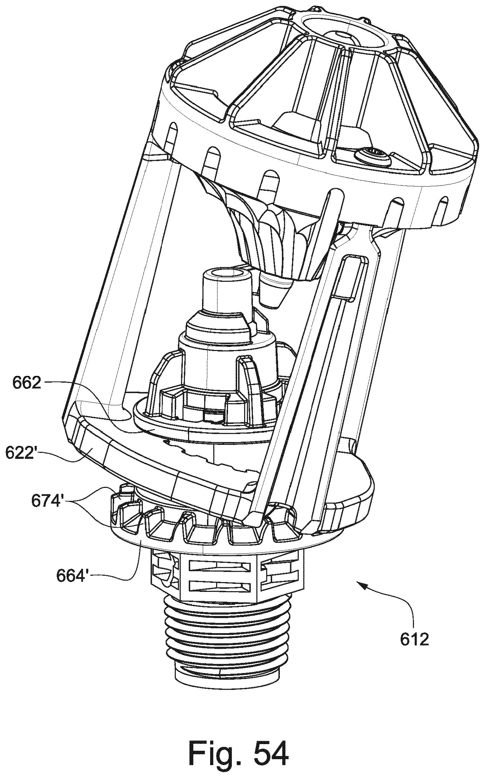

The embodiment shown in FIGS. 54-58 includes similar components to the embodiment useful for understanding the invention shown in FIGS. 49-53. In this embodiment, the spool teeth 674' extend axially from the spool flange 664' with the circumferential rolling ledge 670. In use, the wobbler teeth 676' are positionable in spaces defined between the spool teeth 674'.

As shown, the spool teeth 674' may be tapered from a bottom to a top or include a beveled edge at the top. If the wobbler ring 622' slips on the spool flanges 664', the front surfaces on the spool teeth 674' and the wobbler teeth 676' will roll against one another, preventing further slip. Additionally, leading edges of the spool teeth 674' are closer to vertical than trailing edges of the spool teeth 674'. Because the sprinkler is intended to orbit only in one direction, the wobbler ring 622' will slip in only one direction, and thus, these surfaces of the teeth 674', 676' are made more vertical so as to provide additional clearance between the teeth 674', 676'.

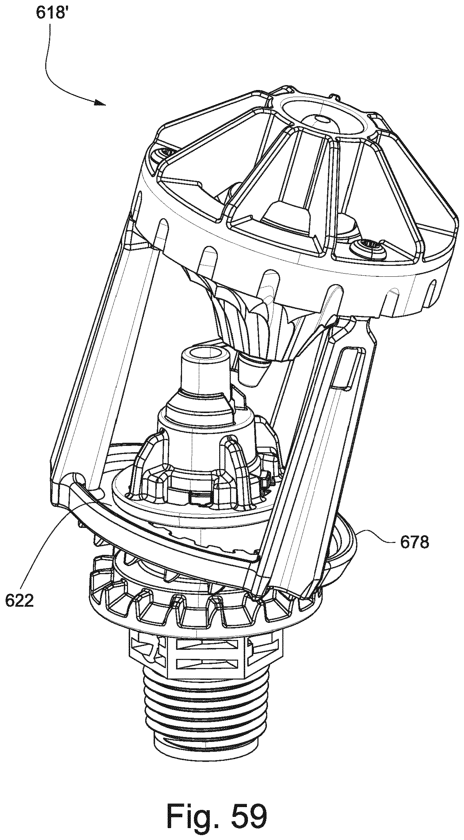

FIG. 59 shows variation of the wobbler cage 618' with an upwardly protruding lip 678 around the periphery of the wobbler cage. In freezing conditions, this lip 678 tends to help prevent ice from building up around the perimeter of the wobbler ring 622 by pooling water within the lip 678.

The described embodiments provide for braking of the orbital action of a wobbler cage without using large fixed strut framework. The resulting structure reduces costs and sprinkler head size while also eliminating the dry shadows in the water pattern created by the fixed strut portions of prior designs. Eliminating the struts also prevents stringy material such as moss or food processing waste in the water to hairpin and build up on the struts. Still further, water patterns can be readily selected by positioning and/or removing teeth from the fixed gear or otherwise switching out the fixed gear to one suited for the desired water pattern. The action of the plate grooves moving in and out of the nozzle stream creates emerging/receding streams that fill in the water pattern for good distribution uniformity without an external diffuser.

## Claims

1. A spool and wobbler assembly for a sprinkler, the spool and wobbler assembly comprising:
a spool section (660) with facing spool flanges (662, 664) on opposite sides of a spool core (668), at least one of the spool flanges including a circumferential rolling ledge (670);
a wobbler cage (618) including a wobbler ring (622) supported on the spool section;
a water deflector plate (620) coupled with the wobbler cage,
wherein an underside of the wobbler ring comprises a circumferential rolling surface (672) engaging the circumferential rolling ledge (670) of the at least one spool flange; and said spool and wobbler assembly further comprising:
spool teeth (674) positioned on an outside circumference of the one of the spool flanges (662, 664) including the circumferential rolling ledge (670), wherein leading edges of the spool teeth (674') are closer to vertical than trailing edges of the spool teeth,
and wherein the underside of the wobbler ring (622) comprises wobbler teeth (676) positioned radially outward of the circumferential rolling surface (672), the wobbler teeth being positionable in spaces defined between the spool teeth.

2. A spool and wobbler assembly according to claim 1, wherein the spool teeth (674) extend radially from the outside circumference of the one of the spool flanges (662, 664) including the circumferential rolling ledge (670).

3. A spool and wobbler assembly according to claim 1, wherein the spool teeth (674') extend axially from the one of the spool flanges (664') including the circumferential rolling ledge (670).

4. A spool and wobbler assembly according to any one of claims 1 to 3, wherein the spool teeth (674') comprise a beveled edge.

5. A spool and wobbler assembly according to any one of the preceding claims, wherein the wobbler ring (622) comprises an upwardly protruding lip (678) around a perimeter of the wobbler ring.

6. A sprinkler head comprising:
the spool and wobbler assembly of any one of claims 1 to 5;
a sprinkler body (612) including said spool section (660);
a nozzle (614) positioned within the sprinkler body (612);
said water deflector plate (620) being disposed downstream of the nozzle (614); and
a brake assembly (632) coupled with the water deflector plate (620) for slowing a rotating and wobbling motion of the wobbler cage and the water deflector plate (620), the brake assembly (632) including a shaft (634) extending through the water deflector plate and a yoke arm (636) disposed at an end of the shaft, wherein the yoke arm is engageable with the sprinkler body (612).

7. A sprinkler head comprising:
the spool and wobbler assembly of any one of claims 1 to 5;
a sprinkler body (612) including said spool section (660), wherein said facing spool flanges (662, 664) on opposite sides of the spool core (668) comprise a top spool flange facing a bottom spool flange on opposite sides of the spool core, the bottom spool flange including said circumferential rolling ledge (670); and
a brake assembly (632) cooperable with the wobbler cage (618) for slowing a rotating and wobbling motion of the wobbler cage and the water deflector plate (620),
wherein said circumferential rolling surface (672) engages the circumferential rolling ledge of the bottom spool flange.

8. A sprinkler head according to claim 7, further comprising a nozzle (614) positioned within the sprinkler body (612), wherein the water deflector plate (620) is positioned downstream of the nozzle.

9. A sprinkler head according to claim 7 or 8, wherein the brake assembly (632) is coupled with the water deflector plate (620) and comprises a shaft (634) extending through the water deflector plate and a yoke arm (636) disposed at an end of the shaft, wherein the yoke arm is engageable with the sprinkler body (612).

## Patentansprüche

1. Spulen- und Wobblerbaugruppe für einen Sprinkler, wobei die Spulen- und Wobblerbaugruppe umfasst:
einen Spulenbereich (660) mit miteinander zugewandten Spulenflanschen (662, 664) auf gegenüberliegenden Seiten eines Spulenkerns (668), wobei wenigstens einer der Spulenflansche eine umlaufende Rollverstärkungsrippe (670) beinhaltet;
einen Wobblerkäfig (618), der einen Wobblerring (622) beinhaltet, der auf dem Spulenbereich gestützt wird;
eine Wasserabweiserplatte (620), die mit dem Wobblerkäfig gekoppelt ist,
wobei eine Unterseite des Wobblerrings eine umlaufende Rolloberfläche (672) umfasst, die in die umlaufende Rollverstärkungsrippe (670) des wenigstens einen Spulenflansches eingreift; und die Spulen- und Wobblerbaugruppe ferner umfasst:
Spulenzähne (674), die an einem Außenumfang des einen der Spulenflansche (662, 664) positioniert sind, der die umlaufende Rollverstärkungsrippe (670) beinhaltet, wobei die Vorderkanten der Spulenzähne (674') näher an der Vertikalen liegen als die Hinterkanten der Spulenzähne,
und wobei die Unterseite des Wobblerrings (622) Wobblerzähne (676) umfasst, die radial außerhalb der Umfangsrolloberfläche (672) angeordnet sind, wobei die Wobblerzähne in den zwischen den Spulenzähnen definierten Räumen positionierbar sind.

2. Spulen- und Wobblerbaugruppe nach Anspruch 1, wobei sich die Spulenzähne (674) radial von dem Außenumfang des einen der Spulenflansche (662, 664) erstrecken, der die umlaufende Rollverstärkungsrippe (670) beinhaltet.

3. Spulen- und Wobblerbaugruppe nach Anspruch 1, wobei sich die Spulenzähne (674') axial von dem einen der Spulenflansche (664') einschließlich der umlaufenden Rollverstärkungsrippe (670) erstrecken.

4. Spulen- und Wobblerbaugruppe nach einem der Ansprüche 1 bis 3, wobei die Spulenzähne (674') eine abgeschrägte Kante umfassen.

5. Spulen- und Wobblerbaugruppe nach einem der vorhergehenden Ansprüche, wobei der Wobblerring (622) eine nach oben vorstehende Lippe (678) um einen Umfang des Wobblerrings umfasst.

6. Sprinklerkopf, umfassend:
die Spulen- und Wobblerbaugruppe nach einem der Ansprüche 1 bis 5;
einen Sprinklerkörper (612), der den Spulenbereich (660) beinhaltet;
eine Düse (614), der innerhalb des Sprinklerkörpers (612) angeordnet ist;
wobei die Wasserabweiserplatte (620) stromabwärts der Düse (614) angeordnet ist; und
eine Bremsbaugruppe (632), die mit der Wasserabweiserplatte (620) gekoppelt ist, um eine um eine Dreh- und Wobbelbewegung des Wobblerkäfigs und der Wasserabweiserplatte (620) zu verlangsamen, wobei die Bremsbaugruppe (632) eine Welle (634), die sich durch die Wasserabweiserplatte erstreckt, und einen Jocharm (636) beinhaltet, der an einem Ende der Welle angeordnet ist, wobei der Jocharm mit dem Sprinklerkörper (612) in Eingriff gebracht werden kann.

7. Sprinklerkopf, umfassend:
die Spulen- und Wobblerbaugruppe nach einem der Ansprüche 1 bis 5;
einen Sprinklerkörper (612), der den Spulenbereich (660) beinhaltet, wobei die einander zugewandten Spulenflansche (662, 664) auf gegenüberliegenden Seiten des Spulenkerns (668) einen oberen Spulenflansch umfassen, der einem unteren Spulenflansch auf gegenüberliegenden Seiten des Spulenkerns zugewandt ist, wobei der untere Spulenflansch die umlaufende Rollverstärkungsrippe (670) beinhaltet; und
eine Bremsbaugruppe (632), die mit dem Wobblerkäfig (618) zusammenwirken kann, um eine Dreh- und Wobbelbewegung des Wobblerkäfigs und der Wasserabweiserplatte (620) zu verlangsamen,
wobei die umlaufende Rolloberfläche (672) in die umlaufende Rollverstärkungsrippe des unteren Spulenflansches eingreift.

8. Sprinklerkopf nach Anspruch 7, der ferner eine Düse (614) umfasst, die innerhalb des Sprinklerkörpers (612) positioniert ist, wobei die Wasserabweiserplatte (620) stromabwärts der Düse positioniert ist.

9. Sprinklerkopf nach Anspruch 7 oder 8, wobei die Bremsbaugruppe (632) mit der Wasserabweiserplatte (620) gekoppelt ist und eine Welle (634), die sich durch die Wasserabweiserplatte erstreckt, und einen Jocharm (636) umfasst, der an einem Ende der Welle angeordnet ist, wobei der Jocharm mit dem Sprinklerkörper (612) in Eingriff gebracht werden kann.

## Revendications

1. Ensemble tambour et oscillateur pour un asperseur, l'ensemble tambour et oscillateur comprenant :
une section tambour (660) avec des brides de tambour en regard (662, 664) sur des côtés opposés d'un centre de tambour (668), au moins une des brides de tambour incluant un rebord de roulement circonférentiel (670) ;
une cage d'oscillateur (618) incluant un anneau d'oscillateur (622) supporté sur la section tambour ;
une plaque déflectrice d'eau (620) accouplée à la cage d'oscillateur,
dans lequel une sous-face de l'anneau d'oscillateur comprend une surface de roulement circonférentielle (672) entrant en prise avec le rebord de roulement circonférentiel (670) de l'au moins une bride de tambour ; et ledit ensemble tambour et oscillateur comprenant en outre :
des dents de tambour (674) positionnées sur une circonférence extérieure de l'une des brides de tambour (662, 664) incluant le rebord de roulement circonférentiel (670), dans lequel des bords d'attaque des dents de tambour (674') sont plus près de la verticale que des bords de fuite des dents de tambour,
et dans lequel la sous-face de l'anneau d'oscillateur (622) comprend des dents d'oscillateur (676) positionnées radialement vers l'extérieur de la surface de roulement circonférentielle (672), les dents d'oscillateur étant positionnables dans des espaces définis entre les dents de tambour.

2. Ensemble tambour et oscillateur selon la revendication 1, dans lequel les dents de tambour (674) s'étendent radialement depuis la circonférence extérieure de l'une des brides de tambour (662, 664) incluant le rebord de roulement circonférentiel (670).

3. Ensemble tambour et oscillateur selon la revendication 1, dans lequel les dents de tambour (674') s'étendent axialement depuis l'une des brides de tambour (664') incluant le rebord de roulement circonférentiel (670).

4. Ensemble tambour et oscillateur selon l'une quelconque des revendications 1 à 3, dans lequel les dents de tambour (674') comprennent un bord biseauté.

5. Ensemble tambour et oscillateur selon l'une quelconque des revendications précédentes, dans lequel l'anneau d'oscillateur (622) comprend une lèvre (678), en saillie vers le haut, autour d'un périmètre de l'anneau d'oscillateur.

6. Tête d'asperseur, comprenant :
l' ensemble tambour et oscillateur de l'une quelconque des revendications 1 à 5 ;
un corps d'asperseur (612) incluant ladite section tambour (660) ;
une buse (614) positionnée à l'intérieur du corps d'asperseur (612) ;
ladite plaque déflectrice d'eau (620) étant disposée en aval de la buse (614) ; et
un ensemble frein (632) accouplé à la plaque déflectrice d'eau (620) pour ralentir un mouvement rotatif et oscillant de la cage d'oscillateur et de la plaque déflectrice d'eau (620), l'ensemble frein (632) incluant une tige (634) s'étendant à travers la plaque déflectrice d'eau et un bras étrier (636) disposé à une extrémité de la tige, dans laquelle le bras étrier peut entrer en prise avec le corps d'asperseur (612).

7. Tête d'asperseur, comprenant :
l'ensemble tambour et oscillateur de l'une quelconque des revendications 1 à 5,
un corps d'asperseur (612) incluant ladite section tambour (660), dans laquelle lesdites brides de tambour en regard (662, 664) sur des côtés opposés du centre de tambour (668) comprennent une bride de tambour supérieure faisant face à une bride de tambour inférieure sur des côtés opposés du centre de tambour, la bride de tambour inférieure incluant ledit rebord de roulement circonférentiel (670) ; et
un ensemble frein (632) pouvant coopérer avec la cage d'oscillateur (618) pour ralentir un mouvement rotatif et oscillant de la cage d'oscillateur et de la plaque déflectrice d'eau (620),
dans laquelle ladite surface de roulement circonférentielle (672) entre en prise avec le rebord de roulement circonférentiel de la bride de tambour inférieure.

8. Tête d'asperseur selon la revendication 7, comprenant en outre une buse (614) positionnée à l'intérieur du corps d'asperseur (612), dans laquelle la plaque déflectrice d'eau (620) est positionnée en aval de la buse.

9. Tête d'asperseur selon la revendication 7 ou 8, dans laquelle l'ensemble frein (632) est accouplé à la plaque déflectrice d'eau (620) et comprend une tige (634) s'étendant à travers la plaque déflectrice d'eau et un bras étrier (636) disposé à une extrémité de la tige, dans laquelle le bras étrier peut entrer en prise avec le corps d'asperseur (612).
